# EUROPEAN PATENT APPLICATION

(11) **EP 4 503 256 A1**
(43) Date of publication of application: **05.02.2025**
(21) Application number: 22956776.3
(22) Date of filing: 30.08.2022
(51) Int. Cl.: H01M 10/48, H01M 50/569

(54) **BATTERY CELL, BATTERY, AND ELECTRIC DEVICE**

(71) Applicant: Contemporary Amperex Technology (Hong Kong) Limited, Central, Central And Western District (HK)
(72) Inventor: CHEN, Long, Ningde, Fujian 352100 (CN); LIN, Denghua, Ningde, Fujian 352100 (CN); ZHOU, Fangjie, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Herrmann, Uwe
(86) International application number: PCT/CN2022/115742
(87) International publication number: WO 2024/044941

(57) **Abstract**

A battery cell, a battery and an electricity-consuming device are provided by the present application. The battery cell includes a casing, an electrode assembly, a detecting assembly and a protecting structure. The casing includes an accommodating chamber; the electrode assembly is accommodated in the accommodating chamber; the detecting assembly is connected to the casing and configured to detect a working condition of the battery cell; and the protecting structure covers at least a portion of a surface of the detecting assembly. According to the embodiments of the present application, the safety and reliability of the battery cell can be effectively improved.

## Description

### TECHNICAL FIELD

The present application relates to the technical field of batteries, and in particular to a battery cell, a battery and an electricity-consuming device.

### BACKGROUND

A battery cell is widely used in an electricity device, such as a mobile phone, a laptop, a battery vehicle, an electric car, an electric plane, an electric ship, an electric toy car, an electric toy ship, an electric toy plane and an electric tool. A battery cell may include a cadmium nickel battery cell, a hydrogen nickel battery cell, a lithium-ion battery cell, a secondary alkaline zinc manganese battery cell or the like.

In the development of the battery cell technology, how to improve the safety performance and the reliability of the battery cell is a research object in the battery technology.

### SUMMARY

The present application provides a battery cell, a battery and an electricity-consuming device, which can improve the safety performance and the reliability of the battery cell.

In a first aspect, embodiments of the present application provide a battery cell including a casing, an electrode assembly, a detecting assembly and a protecting structure. The casing includes an accommodating chamber; the electrode assembly is accommodated in the accommodating chamber; the detecting assembly is connected to the casing and configured to detect a working condition of the battery cell; and the protecting structure covers at least a portion of a surface of the detecting assembly.

In the above technical solution, by arranging the detecting assembly and the protecting structure for protecting the detecting assembly on the battery cell, the detecting assembly can detect the working condition of the battery cell in real time, quickly warn of the abnormal parameters during the operation of the battery cell, enable the corresponding safety agencies or personnel to respond in time, so as to improve the safety performance and the reliability of the battery cell. The protecting structure covers at least a portion of the surface of the detecting assembly, which can reduce the risk of damage to the detecting assembly during the production or using of the battery cell.

In some embodiments in the first aspect, the casing includes a first wall, and the detecting assembly is connected to the first wall.

In some embodiments in the first aspect, the detecting assembly is located on a side of the first wall away from the accommodating chamber, which can reduce the occupation of the internal space of the battery cell by the detecting assembly and improve the energy density of the battery cell. Furthermore, the detecting assembly is located on the side of the first wall away from the accommodating chamber, which facilitates the assembly of the detecting assembly.

In some embodiments in the first aspect, the casing includes an electrode terminal, the electrode terminal protrudes from a surface of the first wall on a side away from the accommodating chamber, the electrode terminal is electrically connected to an electrode tab of the electrode assembly, and the detecting assembly is electrically connected to the electrode terminal.

In some embodiments in the first aspect, a surface of the protecting structure away from the first wall is not higher than a surface of the electrode terminal away from the first wall in a thickness direction of the first wall.

In the above technical solution, the protecting structure covers the surface of the detecting assembly without increasing the thickness of the first wall, which can reduce the overall volume of the battery cell and further reduce the risk of the interference between the protecting structure and other components in the battery.

In some embodiments in the first aspect, the detecting assembly is located on a side of the first wall facing the accommodating chamber, which can reduce the overall volume of the battery cell. Further, the detecting assembly is located on the side of the first wall facing the accommodating chamber, which can also improve the flatness and the integrity of an outer surface of the battery cell.

In some embodiments in the first aspect, the first wall is provided with a concave part, the concave part is formed by recessing a surface of the first wall on a side away from the accommodating chamber in a direction facing the accommodating chamber, or the concave part is formed by recessing a surface of the first wall on a side facing the accommodating chamber in a direction away from the accommodating chamber; and the detecting assembly is at least partially accommodated in the concave part.

In the above technical solution, by providing the concave part on the first wall, the detecting assembly can be at least partially accommodated in the concave part, which can improve the flatness of the surface of the first wall and reduce the risk of the interference between the detecting assembly and other components in the battery.

In some embodiments in the first aspect, a shape and a size of the protecting structure match with a shape and a size of an outer contour of the concave part, respectively, so as to improve the tightness of the coordination between the protecting structure and the concave part, further enhance the protective effect of the protecting structure.

In some embodiments in the first aspect, in a thickness direction of the first wall, a surface of the protecting structure away from the first wall is not higher than the surface of the first wall on the side away from the accommodating chamber, so as to further improve the flatness of the surface of the first wall.

In some embodiments in the first aspect, the protecting structure includes a main body, which covers at least a portion of the surface of the detecting assembly.

In the above technical solution, the main body has a certain thickness and hardness, thus has the relatively strong deformation resistance, which can protect the detecting assembly more effectively.

In some embodiments in the first aspect, the protecting structure further includes a side part, which surrounds and is connected to the main body to form an accommodating space, and the accommodating space is configured to accommodate the detecting assembly.

In the above technical solution, by setting the protecting structure as a cover-like structure provided with the accommodating space, the detecting assembly can be covered and protected, and can be accommodated in the accommodating space, thereby reducing the risk of the interference between the protecting structure and the detecting assembly, and further improving the protective effect of the protecting structure.

In some embodiments in the first aspect, the protecting structure is a film structure, which is attached to at least a portion of the surface of the detecting assembly.

In the above technical solution, the protecting structure is set as the film structure, which has a relatively thin thickness and can be attached to the surface of the detecting assembly, thereby effectively reducing the structural complexity of the protecting structure. Furthermore, the film structure can be attached to the surface of the detecting assembly during the manufacturing process to form the protecting structure, which is conducive to simplifying the process flow.

In some embodiments in the first aspect, the protecting structure is snap-fitted or bonded to the casing.

In the above technical solution, in the case that the protecting structure is connected to the casing of the battery cell by means of bonding, the protecting structure can further enhance the protective effect of the protecting structure. In the case that the protecting structure is connected to the casing of the battery cell by means of snap-fitting, the protecting structure can improve the convenience of the mounting of the protecting structure.

In some embodiments in the first aspect, the battery cell further includes an insulating member, which is configured to insulate the electrode terminal from the first wall; and the detecting assembly includes a sensing component and a conductive wiring, which are connected to each other, and the sensing component is electrically connected to the electrode terminal through the conductive wiring.

In some embodiments in the first aspect, a connecting part is arranged on a surface of the electrode terminal on a side away from the first wall, and the conductive wiring is connected to the connecting part to electrically connect the sensing component with the electrode terminal.

In some embodiments in the first aspect, the insulating member includes a protrusion protruding from the surface of the electrode terminal on the side away from the first wall, and the protrusion is configured to separate the surface of the electrode terminal on the side away from the first wall from the connecting part.

In the above technical solution, by arranging protrusion to separate the connecting part from a central region of the surface of the electrode terminal on the side away from the first wall, the risk of damage to the detecting assembly during the formation process of the battery cell can be reduced.

In some embodiments in the first aspect, the insulating member is provided with a through hole, and the conductive wiring passes through the through hole and is connected to the electrode terminal.

In the above technical solution, the conductive wiring passes through the through hole and is connected to the electrode terminal located inside the insulating member. The conductive wiring and the connecting part of the electrode terminal are located inside the insulating member, thereby reducing the risk of damage to the conductive wiring and the connecting part of the electrode terminal due to exposure to the external environment.

In some embodiments in the first aspect, the casing includes a casing body and an end cover, the casing body is provided with an opening, and the end cover is configured to cap the opening; and the end cover is the first wall of the casing.

In some embodiments in the first aspect, the protecting structure is provided with a reinforcing part, which is formed by protruding from a surface of the protecting structure on a side away from the detecting assembly.

In the above technical solution, by arranging the reinforcing part on the protecting structure, the compressive strength of the protecting structure can be enhanced, and the protective effect of the protecting structure can be further improved.

In some embodiments in the first aspect, a material of the protecting structure is an electric-insulating and heat-insulating material.

In the above technical solution, by using the electric-insulating and heat-insulating material to manufacture the protecting structure, the impact of the heat generated by the battery cell during using on the protecting structure can be reduced, and the service life of the protecting structure can be improved. In addition, the risk of the short circuit caused by the contact interference between the protecting structure and the detecting assembly which may affect the normal use of the detecting assembly can be reduced.

In a second aspect, embodiments of the present application provide a battery, including the battery cell according to any one of the embodiments in the second aspect.

In a third aspect, embodiments of the present application provide an electricity-consuming device, including the battery cell according to any one of the embodiments in the second aspect, which is configured to supply electrical energy.

The above description is merely an overview of the technical solution of the present application. In order to understand the technical solution of the present application more clearly, it can be implemented according to the content of the description. In order to make the above and other purposes, features and advantages of the present application more obvious and easy to be understood, the specific embodiments of the present application are described below.

### BRIEF DESCRIPTION OF THE DRAWINGS

By reading the detailed description of the preferred embodiments below, various other advantages and benefits will become clear to those skilled in the art. The drawings are merely for the purpose of illustrating the preferred embodiments and are not considered a limitation on the present application. And in all of the drawings, the same reference numerals are used to represent the same components, respectively. In the drawings:
Fig. 1 shows a structural schematic view of a vehicle according to some embodiments of the present application;
Fig. 2 shows an exploded structural schematic view of a battery according to some embodiments of the present application;
Fig. 3 shows a structural schematic view of a battery module in Fig. 2;
Fig. 4 shows an exploded schematic view of a battery cell according to some embodiments of the present application;
Fig. 5 shows an exploded schematic view of a first wall of a battery cell according to some embodiments of the present application;
Fig. 6 shows a structural schematic view of a protecting structure according to some embodiments of the present application;
Fig. 7 shows a structural schematic view of another protecting structure according to some embodiments of the present application;
Fig. 8 shows an exploded schematic view of another first wall of a battery cell according to some embodiments of the present application;
Fig. 9 shows a schematic view of a local structure of an electrode terminal of a battery cell according to some embodiments of the present application;
Fig. 10 shows a schematic view of a local structure of an electrode terminal of another battery cell according to some embodiments of the present application;
Fig. 11 shows a schematic view of a local structure of an electrode terminal of another battery cell according to some embodiments of the present application; and
Fig. 12 shows a structural schematic view of another protecting structure according to some embodiments of the present application.

The reference numerals in the embodiments are as follows:
1. vehicle; 2. battery; 3. controller; 4. motor; 5. housing; 5a. first housing portion; 5b. second housing portion; 5c. accommodation space; 6. battery module; 7. battery cell; 10. electrode assembly; 20. casing; 30. first wall; 31. electrode terminal; 32. concave part; 33. insulating member; 331. protrusion; 332. through hole; 40. detecting assembly; 41. sensing component; 42. conductive wiring; 43. connecting part; 50. protecting structure; 51. main body; 52. side part; 53. reinforcing part.

### DETAILED DESCRIPTION

Embodiments of the technical solutions of the present application will be described in detail below in conjunction with the drawings. The following examples are only used to illustrate the technical solution of the present application more clearly, and therefore are only examples, rather than restricting the protection scope of the present application.

In order to make the objects, technical solutions and advantages of the embodiments of the present application more clear, the technical solutions of the embodiments of the present application will be clearly and completely described below in conjunction with the drawings of the embodiments of the present application. It is apparent that the described embodiments are a portion of the embodiments of the present application, and not all of them. Based on the embodiments of the present application, all other embodiments obtained by those skilled in the art without the creative labor fall within the scope of the present application.

Unless otherwise defined, technical terms or scientific terms used in the present disclosure should be interpreted according to common meanings thereof as commonly understood by those of ordinary skills in the art. The terms used in the description in the present application are only for the purpose of describing specific embodiments and are not intended to limit the present application. The terms "including" and "having" in the description and the claims of the present application and the above description of the drawings, and any variations thereof are intended to cover non-exclusive inclusions. The terms "first", "second", etc. in the description and the claims of the present application or the above-mentioned drawings are used to distinguish different objects, rather than to describe a specific order or a primary-secondary relationship.

The "embodiments" referred in the present application means that specific features, structures or characteristics described in conjunction with the embodiments may be included in at least one embodiment of the present application. This word appeared in various places in the description does not necessarily refer to the same embodiment, nor is it an independent or alternative embodiment mutually exclusive with other embodiments.

In the description of the present application, it should be noted that, unless otherwise clearly specified and limited, the terms "mount", "connecting" and "connection" and "attach" should be understood in a broad sense, for example, it can be a fixed connection, a detachable connection, or an integral connection, it can be connected directly, it can be connected indirectly through an intermedium, or it can be a communication between two elements at insides thereof. For those of ordinary skill in the art, the specific meaning of the above-mentioned terms in the present application can be understood according to specific situations.

The term "and/or" in the present application is merely an association relationship describing associated objects, which means that there can be three types of relationships. For example, "A and/or B" can mean three cases that there is only A, there are A and B at the same time, and there is only B. In addition, the punctuation mark "/" in the present application generally indicates that the related objects of the preceding content and following content are in an "or" relationship.

In the embodiments of the present application, the same reference numerals denote the same components, and for the sake of brevity, in different embodiments, detailed descriptions of the same components are omitted. It should be understood that the thickness, distance, width and other sizes of the various components in the embodiments of the present application shown in the drawings, as well as the overall thickness, distance and width, etc., of the integrated device are only exemplary descriptions, and should not constitute any limitation to the present application.

The "plurality" in the present application refers to two or more (including two).

The term "parallel" in the present application not only includes the situation of strictly parallel, but also includes the situation of general parallel recognized in engineering; in addition, the term "perpendicular" not only includes the situation of strictly perpendicular, but also includes the situation of general perpendicular recognized in engineering.

At present, based on the development of the market situation, the application of a power battery is becoming increasingly widespread. The power battery is not only used in an energy storage power system such as a hydropower, firepower, wind power or solar power plant and the like, but also widely used in an electric vehicle such as an electric bicycle, an electric motorcycle, an electric vehicle and the like, as well as in various fields such as military equipment, aerospace and the like. With the continuous expansion of the application field of the power battery, the market demand thereof is also constantly expanding.

In embodiments of the present application, a battery cell may include, but not limited to, a lithium-ion secondary battery cell, a lithium-ion primary battery cell, a lithium-sulfur battery cell, a sodium lithium ion battery cell, a sodium ion battery cell, a magnesium ion battery cell and the like. In embodiments of the present application, the battery cell can be in a shape of, but not limited to, a cylinder, a flatten body, a cuboid or other shapes. In embodiments of the present application, the battery cell can include, but not limited to, three types according to the packaging method such as a cylindrical battery cell, a square battery cell and a soft packaging battery cell.

The battery mentioned in the embodiments of the present application refers to a single physical module that includes one or more battery cells to provide higher voltage and capacity. For example, the battery mentioned in the present application may include a battery module, a battery pack or the like. The battery generally includes a housing for packaging one or more battery cells. The housing can prevent liquid or other foreign objects from affecting the electrical charge or the electrical discharge of the battery cell.

The battery cell includes an electrode assembly and an electrolyte, and the electrode assembly includes a positive electrode sheet, a negative electrode sheet and a separator. The battery cell mainly relies on the movement of metal ions between the positive electrode sheet and the negative electrode sheet to work. The positive electrode sheet includes a positive electrode current collector and a positive electrode active material layer applied on the surface of the positive electrode current collector. The current collector not coated with the positive electrode active material layer protrudes from the current collector coated with the positive electrode active material layer, and the current collector not coated with the positive electrode active material layer is stacked to be as a positive electrode tab. Taking a lithium ion battery as an example, the material of the positive electrode current collector may be aluminum, and the positive electrode active material layer includes a positive electrode active material, which may be lithium cobaltate, lithium iron phosphate, ternary lithium, lithium manganite or the like. The negative electrode sheet includes a negative electrode current collector and a negative electrode active material layer applied on the surface of the negative electrode current collector. The current collector not coated with the negative electrode active material layer protrudes from the current collector coated with the negative electrode active material layer, and the current collector not coated with the negative electrode active material layer is stacked to be as a negative electrode tab. The material of the negative electrode current collector may be copper, and the negative electrode active material layer includes a negative electrode active material, which may be carbon, silicon or the like. The material of the separator may be PP (polypropylene), PE (polyethylene) or the like. In addition, the electrode assembly may be a winding-type structure or a stack-type structure, which is not limited in the embodiments of the present application.

The battery cell further includes a casing, which includes a casing body, an end cover, an electrode terminal and an insulating member. The casing is provided with an opening, and the end cover caps and is sealingly connected to the opening to form a sealing space for accommodating the electrode assembly and electrolyte liquid. The insulating member sleeves on the electrode terminal, so as to prevent the short circuit at the electrode terminal.

The inventors of the present application note that, at present, none of the existing battery cells is provided with a detecting assembly, so that it is impossible to detect the working condition of the battery cell in real time. Herein, the working condition of the battery cell includes but is not limited to the relevant data such as voltage and temperature. In addition, the existing battery cell is not provided with a protecting structure for the detecting assembly.

In order to solve the problem that the working condition of the battery cell cannot be detected in real time, the inventors of the present application have found that the working condition of the battery cell can be detected in real time by providing a detecting assembly. The detecting assembly can manage and control the working condition of the battery cell in real time, quickly warn of the abnormal parameters during the operation of the battery cell, enable the corresponding safety agencies or personnel to respond in time, so as to improve the safety performance and the reliability of the battery cell. In addition, a protecting structure for protecting the detecting assembly can be provided to reduce the risk of damage to the detecting assembly during using the battery cell.

Based on the above considerations, the inventors have conducted in-depth research and designed a battery cell. By arranging the detecting assembly and the protecting structure for protecting the detecting assembly on the battery cell, the working condition of the battery cell can be managed and controlled in real time, and the risk of damage to the detecting assembly during using the battery cell can be reduced.

The technical solution described in the embodiments of the present application is applicable to a battery cell, a battery and an electricity-consuming devices using the battery.

The electricity-consuming device may be a vehicle, a mobile phone, a portable device, a notebook computer, a ship, a spacecraft, an electric toy, an electric tool or the like. The vehicle may be a fuel car, a gas car or a new energy car, and the new energy car can be a pure electric car, a hybrid car, a range-extended car or the like; the spacecraft may include an airplane, a rocket, a space shuttle, a space ship or the like; the electric toy may include a fixed-type or mobile-type electric toy, such as a game player, an electric car toy, an electric ship toy, an electric airplane toy or the like; the power tool may include a metal cutting power tool, a grinding power tool, an assembly power tool and a railway power tools, such as an electric drill, an electric grinder, an electric wrench, an electric screwdriver, an electric hammer, an impact drill, a concrete vibrator, an electric planers or the like. Embodiments of the present application do not impose specific limitation to the above-mentioned electricity-consuming device.

It should be understood that the technical solution described in the embodiments of the present application is not limited to the battery and the electricity-consuming device described above, but can also be applicable to all of the batteries including the housings and the electricity-consuming devices using the batteries. For the convenience of explanation, the following embodiments take an electrical vehicle as an example to illustrate.

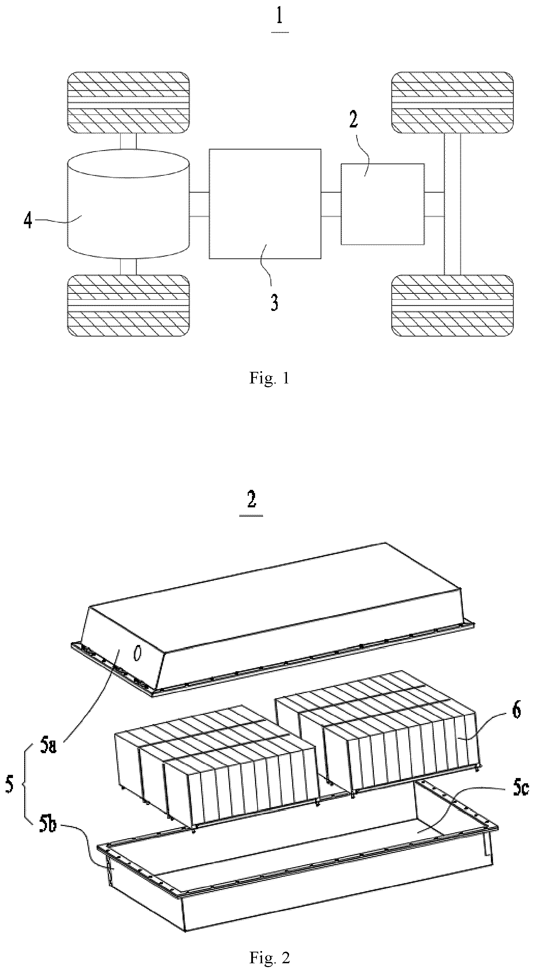

Fig. 1 shows a structural schematic view of a vehicle according to some embodiments of the present application.

As shown in Fig. 1, a battery 2 may be arranged at the inside of the vehicle 1, and the battery 2 may be arranged in the bottom, the front or the back of the vehicle 1. The battery 2 can be used to supply power to the vehicle 1, for example, the battery 2 can be used as an operating power source of the vehicle 1.

The vehicle 1 may further include a controller 3 and a motor 4. The controller 3 can be used to control the battery 2 to supply power to the motor 4, for example, for satisfying the work electricity needs of the vehicle 1 during starting, navigating and driving.

In some embodiments of the present application, the battery 2 can not only serve as an operating power source for the vehicle 1, but also as a driving power source for the vehicle 1, so as to replace or partially replace the fuel or the natural gas and provide the driving power for the vehicle 1.

Fig. 2 shows an exploded structural schematic view of a battery according to some embodiment of the present application.

As shown in Fig. 2, the battery 2 includes a housing 5 and a battery cell which is accommodated in the housing 5.

The housing 5 is used to accommodate the battery cell, and the housing 5 can be of various structures. In some embodiments, the housing 5 may include a first housing portion 5a and a second housing portion 5b. The first housing portion 5a and the second housing portion 5b cover each other. The first housing portion 5a and the second housing portion 5b jointly define an accommodating space for accommodating the battery cell. The second housing portion 5b may be a hollow structure having an opening at an end, and the first housing portion 5a may be a plate-like structure. The first housing portion 5a is covered with the side of the second housing portion 5b with the opening to form the housing 5 having the accommodating space 5c. Or each of the first housing portion 5a and the second housing portion 5b may be a hollow structure having an opening on a side. The side of the first housing portion 5a with the opening is covered with the side of the second housing portion 5b with the opening to form the housing 5 having the accommodation space 5c. Of course, the first housing portion 5a and the second housing portion 5b may be in various shapes, such as a cylinder and a rectangular parallelepiped.

In order to improve the sealing performance after the first housing portion 5a is connected with the second housing portion 5b, a sealing member, such as a sealant and a sealing ring, may be arranged between the first housing portion 5a and the second housing portion 5b.

It can be assumed that the first housing portion 5a is covered with the second housing portion 5b, the first housing portion 5a can be called an upper housing cover, and the second housing portion 5b can be called a lower housing portion.

In the battery 2, there may be one or more battery cells. If there are a plurality of battery cells, the plurality of battery cells can be connected in series, in parallel or in hybrid. The hybrid connection means that the plurality of battery cells are connected in series and parallel in combination. The plurality of battery cells can be directly connected in series, parallel or hybrid together, and then a whole composed of the plurality of battery cells can be accommodated in the housing 5. Or the plurality of battery cells can be connected in series, in parallel or hybrid to form the battery module 6. A plurality of battery modules 6 are connected in series, in parallel or in hybrid to form a whole and are accommodated in the housing 5.

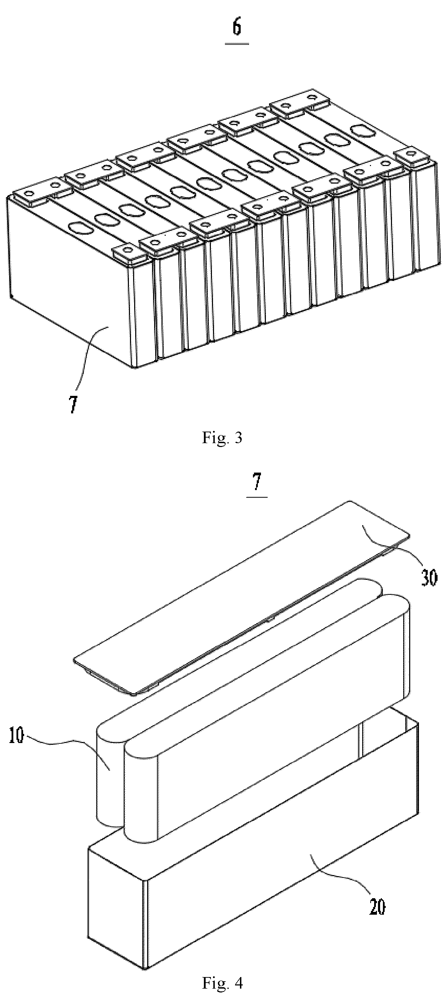

Fig. 3 shows a structural schematic view of a battery module in Fig. 2.

In some embodiments, as shown in Fig. 3, there are a plurality of battery cells 7. The plurality of battery cells 7 are connected in series, in parallel or in hybrid to form the battery module 6. The plurality of battery cells battery modules 6 are connected in series, in parallel or in hybrid to form a whole and are accommodated in the housing.

The plurality of battery cells 7 in battery module 6 may be electrically connected with one another through a busbar, so as to achieve the parallel connection, the series connection or the hybrid connection among the plurality of battery cells 7 in the battery module 6.

Fig. 4 shows an exploded schematic view of a battery cell according to some embodiments of the present application.

As shown in Fig. 4, the battery cell 7 provided by the embodiments of the present application includes an electrode assembly 10 and a casing 20, and the electrode assembly 10 is accommodated in the casing 20. The casing 20 also can accommodate the electrolyte, such as the electrolyte liquid.

In some embodiments, the casing 20 may include a first wall 30, which can be in various shapes, such as a cylinder and a cuboid. The shape of casing 20 can be determined based on the specific shape of the electrode assembly 10. For example, if the electrode assembly 10 is a cylindrical structure, the casing can be in shape of cylinder; if the electrode assembly 10 is in shape of cuboid, the casing can be in shape of cuboid.

In the battery cell 7, there may be one, two or more electrode assemblies 10 accommodated in the casing 20.Exemplarily, in Fig. 4, there are two electrode assemblies 10.

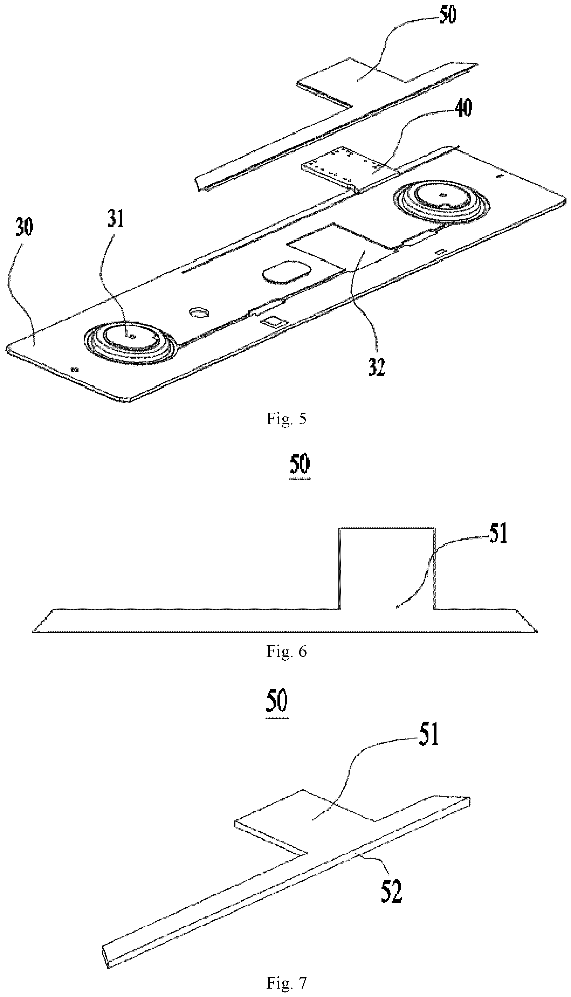

Fig. 5 shows an exploded schematic view of a first wall of a battery cell according to some embodiments of the present application.

Referring to Fig. 5, embodiments of the present application provide a battery cell 7 including a casing 20, an electrode assembly 10, a detecting assembly 40 and a protecting structure 50. The casing 20 includes an accommodating chamber; the electrode assembly 10 is accommodated in the accommodating chamber; the detecting assembly 40 is connected to the casing 20 and configured to detect a working condition of the battery cell 7; and the protecting structure 50 covers at least a portion of a surface of the detecting assembly 40.

Optionally, the detecting assembly 40 can be arranged on a side of the casing 20 away from the accommodating chamber, or on aside of the casing 20 facing the accommodating chamber. The detecting assembly 40 is arranged on the side of the casing 20 away from the accommodating chamber, which can reduce the occupation of the internal space of the battery cell 7 by the detecting assembly 40; or the detecting assembly 40 is arranged on the side of the casing 20 facing the accommodating chamber, which can reduce the overall volume of the battery cell 7. The detecting assembly 40 can detect the working conditions of battery cell 7 in real time, and the working conditions include but not limited to voltage, temperature and other relevant data. By arranging the detecting assembly 40 on the battery cell 7, the detecting assembly can manage and control the working condition of the battery cell 7 in real time, quickly warn of the abnormal parameters during the operation of the battery cell 7, enable the corresponding safety agencies or personnel to respond in time, so as to improve the safety performance and the reliability of the battery cell.

In some embodiments, the casing 20 includes a first wall 30, and the detecting assembly 40 is connected to the first wall 30. The first wall 30 can be any one of wall parts surrounding and forming the casing 20 of the battery cell 7, and the connection method between the detecting assembly 40 and the first wall 30 may be, but not limited to welding, snap-fitting, bonding or the like.

In some embodiments, the detecting assembly 40 is located on a side of the first wall 30 away from the accommodating chamber, that is, the detecting assembly 40 is located outside the battery cell 7, which can reduce the occupation of the internal space of the battery cell 7 by the detecting assembly 40 and improve the energy density of the battery cell 7. Furthermore, the detecting assembly 40 is located on the side of the first wall 30 away from the accommodating chamber, which facilitates the assembly of the detecting assembly 40.

The protecting structure 50 covers at least a portion of the surface of the detecting assembly 40, which can reduce the risk of damage to the detecting assembly 40 during the production or using of the battery cell 7. In a thickness direction of the first wall 30, a shape of an orthogonal projection of the protecting structure 50 on the first wall 30 may be rectangular, triangular, circular or the like; a shape of an orthogonal projection of the protecting structure 50 on the detecting assembly 40 is not limited in the present application, which can be selected according to the actual situation. Exemplarily, the protecting structure 50 may be, but is not limited to, a sheet-like structure, a cover-like structure, a film structure or the like.

In the above technical solution, by arranging the detecting assembly 40 and the protecting structure 50 for protecting the detecting assembly 40 on the battery cell 7, the detecting assembly 40 can detect the working condition of the battery cell 7 in real time, quickly warn of the abnormal parameters during the operation of the battery cell 7, enable the corresponding safety agencies or personnel to respond in time, so as to improve the safety performance and the reliability of the battery cell 7. The protecting structure 50 covers at least a portion of the surface of the detecting assembly 40, which can reduce the risk of damage to the detecting assembly 40 during the production or using of the battery cell 7.

In some embodiments in the first aspect, the casing 20 includes an electrode terminal 31, the electrode terminal 31 protrudes from a surface of the first wall 30 on a side away from the accommodating chamber, the electrode terminal 31 is electrically connected to an electrode tab of the electrode assembly 10, and the detecting assembly 40 is electrically connected to the electrode terminal 31.

Exemplarily, the connection method between the electrode terminal 31 and the first wall 30 may be, but is not limited to, welding, riveting, bonding or the like. The detecting assembly 40 is electrically connected to the electrode terminal 31, which can detect the relevant data such as voltage and temperature at the electrode terminal 31 of the battery cell 7, manage and detect the working condition of the battery cell 7 in real time, quickly warn of the abnormal parameters during the operation of the battery cell 7, enable the corresponding safety agencies or personnel to respond in time, so as to improve the safety performance and the reliability of the battery cell 7.

In some embodiments, a surface of the protecting structure 50 away from the first wall 30 is not higher than a surface of the electrode terminal 31 away from the first wall 30 in a thickness direction of the first wall 30.

Exemplarily, in this embodiment, the concept of the present invention is illustrated by arranging the detecting assembly 40 on the side of the first wall 30 away from the accommodating chamber. The electrode terminal 31 protrudes from the surface of the first wall 30 away from the accommodating chamber, and the protecting structure 50 covers at least a portion of the surface of the detecting assembly 40. In the thickness direction of the first wall 30, the surface of the protecting structure 50 away from the first wall 30 is not higher than the surface of the electrode terminal 31 away from the first wall 30. That is, the sum of the thicknesses of the protecting structure 50 and the detecting assembly 40 is not larger than the thickness of the surface of the electrode terminal 31 protruding from the first wall 30 away from the accommodating chamber.

In the above technical solution, the protecting structure 50 covers the surface of the detecting assembly 40 without increasing the thickness of the first wall 30, which can reduce the overall volume of the battery cell 7 and further reduce the risk of the interference between the protecting structure 50 and other components in the battery.

In some embodiments, the detecting assembly 40 is located on a side of the first wall 30 facing the accommodating chamber, that is, the detecting assembly 40 is located inside the battery cell 7, which can reduce the overall volume of the battery cell 7. Further, the detecting assembly 40 is located on the side of the first wall 30 facing the accommodating chamber, which can also improve the flatness and the integrity of an outer surface of the battery cell 7.

In some embodiments, the first wall 30 is provided with a concave part 32, the concave part 32 is formed by recessing a surface of the first wall 30 on a side away from the accommodating chamber in a direction facing the accommodating chamber, or the concave part 32 is formed by recessing a surface of the first wall 30 on a side facing the accommodating chamber in a direction away from the accommodating chamber; and the detecting assembly 40 is at least partially accommodated in the concave part 32.

Exemplarily, when the detecting assembly 40 is arranged on the side of the first wall 30 away from the accommodating chamber, the concave part 32 is formed by recessing a surface of the first wall 30 on the side away from the accommodating chamber in a direction away from the accommodating chamber; and the detecting assembly is at least partially accommodated in the concave part 32. An orthogonal projection of the concave part 32 on the first wall 30 in the thickness direction of the first wall 30 may be in shape of rectangle, triangle, circle or the like, or may be in a shape that matches with the contour of the detecting assembly 40.

When the detecting assembly 40 is arranged on the side of the first wall 30 facing the accommodating chamber, the concave part 32 is formed by recessing a surface of the first wall 30 on the side facing the accommodating chamber in a direction away from the accommodating chamber; and the detecting assembly is at least partially accommodated in the concave part 32. The orthogonal projection of the concave part 32 on the first wall 30 in the thickness direction of the first wall 30 may be in shape of rectangle, triangle, circle or the like, or may be in a shape that matches with the contour of the detecting assembly 40.

In the thickness direction of the first wall 30, the concave depth of the concave part 32 can be larger than the thickness of the detecting assembly 40, equal to the thickness of the detecting assembly 40, or less than the thickness of the detecting assembly 40. The specific depth of the concave part 32 is not limited in the present application, which can be selected according to the actual situation.

By providing the concave part 32 on the first wall 30, the detecting assembly 40 can be at least partially accommodated in the concave part 32, which can improve the flatness of the surface of the first wall 30 and reduce the risk of the interference between the detecting assembly 40 and other components in the battery.

In some embodiments, a shape and a size of the protecting structure 50 match with a shape and a size of an outer contour of the concave part 32, respectively,

The shape and the size of the protecting structure 50 match with the shape and the size of an outer contour of the concave part 32, respectively, so that the protecting structure 50 can be embedded into the concave part 32, so as to improve the tightness of the coordination between the protecting structure 50 and the concave part 32, further enhance the protective effect of the protecting structure 50.

In some embodiments, in a thickness direction of the first wall 30, a surface of the protecting structure 50 away from the first wall 30 is not higher than the surface of the first wall 30 on the side away from the accommodating chamber, so as to further improve the flatness of the surface of the first wall 30.

Fig. 6 shows a structural schematic view of a protecting structure according to some embodiments of the present application.

Referring to Fig. 6, in some embodiments, the protecting structure 50 includes a main body 51, which covers at least a portion of the surface of the detecting assembly 40.

Specifically, the main body 51 of the protecting structure 50 is a sheet-like structure. The main body 51 can be made of the material, but is not limited to, polyester resin, polyethylene, polypropylene or the like. The specific implementation method of the main body 51 covering at least a portion of the surface of the detecting assembly 40 can be that the main body 51 is connected to the first wall 30 and covers at least a portion of the surface of the detecting assembly 40. The connection method between the main body 51 and the first wall 30 may be, but is not limited to, welding, clamping, bonding or the like. Alternatively, the main body 51 can be directly connected to at least a portion of the surface of the detecting assembly 40. The connection method between the main body 51 and the detecting assembly 40 may be, but is not limited to, welding, clamping, bonding or the like. The sheet-like structure has a certain thickness and hardness, thus has the relatively strong deformation resistance, which can protect the detecting assembly 40 more effectively.

In the above-mentioned technical solution, the main body 51 has a certain thickness and hardness, thus has the relatively strong deformation resistance, which can protect the detecting assembly 40 more effectively.

Fig. 7 shows a structural schematic view of another protecting structure according to some embodiments of the present application.

Referring to Fig. 7, in some embodiments, the protecting structure 50 further includes a side part 52, which surrounds and is connected to the main body 51 to form an accommodating space, and the accommodating space is configured to accommodate the detecting assembly.

Specifically, the side part 52 surrounds and is connected to the main body 51 to form a cover-like structure provided with accommodating space. The side part 52 can be made of the material, but is not limited to, polyester resin, polyethylene, polypropylene or the like. The main body 51 and the side part 52 can be an integrated-formed structure, which can effectively improve the structural strength of the protecting structure 50. The accommodating space can accommodate the detecting assembly 40.

In the above technical solution, by setting the protecting structure 50 as the cover-like structure provided with the accommodating space, the detecting assembly 40 can be covered and protected, and can be accommodated in the accommodating space, thereby reducing the risk of the interference between the protecting structure 50 and the detecting assembly 40, and further improving the protective effect of the protecting structure 50.

In some embodiments, the protecting structure 50 is a film structure, which is attached to at least a portion of the surface of the detecting assembly 40.

The film structure is made of a high-strength flexible film material and an auxiliary structure that can generate a certain amount of predetermined tension stress inside, and formed as a certain spatial shape under the control of the stress, so as to form a covering structure. The film structure has the sufficient stiffness to resist the external load.

In the above technical solution, the protecting structure 50 is set as the film structure, which has a relatively thin thickness and can be attached to the surface of the detecting assembly 40, thereby effectively reducing the structural complexity of the protecting structure 50. Furthermore, the film structure can be attached to the surface of the detecting assembly 40 during the manufacturing process to form the protecting structure 50, which is conducive to simplifying the process flow.

In some embodiments, the protecting structure 50 is snap-fitted or bonded to the casing 20.

Exemplarily, in the case that the protecting structure 50 is connected to the casing 20 of the battery cell 7 by means of bonding, the protecting structure 50 includes a base body and an adhesive layer, and the adhesive layer is used for bonding with the casing 20 to fixedly connect the protecting structure 50 with the casing 20. The base body of the protecting structure 50 has a higher hardness compared with the adhesive layer, which can effectively protect the detecting assembly 40 from damage. Meanwhile, since the adhesive layer is relatively soft and has the relatively high deformation ability, after the protecting structure 50 is connected to the casing 20 through the adhesive layer, the adhesive layer can serve as a sealing in a gap between the protecting structure 50 and the casing 20, thereby preventing the detecting assembly 40 from being in contact with the debris or dust entering through the gap to affect the operation of the detecting assembly 40, and further strengthening the protective effect of the protecting structure 50.

In the case that the protecting structure 50 is connected to the casing 20 of the battery cell 7 by means of snap-fitting, the protecting structure 50 includes a base body and a snap-fitting member arranged on the base body. The casing 20 is provided with a snap-fitting structure cooperating to the snap-fitting member, and the snap-fitting member cooperates with the clamping structure to ensure that the protecting structure 50 can be snap-fitted and connected to the casing 20, which can improve the convenience of the mounting of the protecting structure 50.

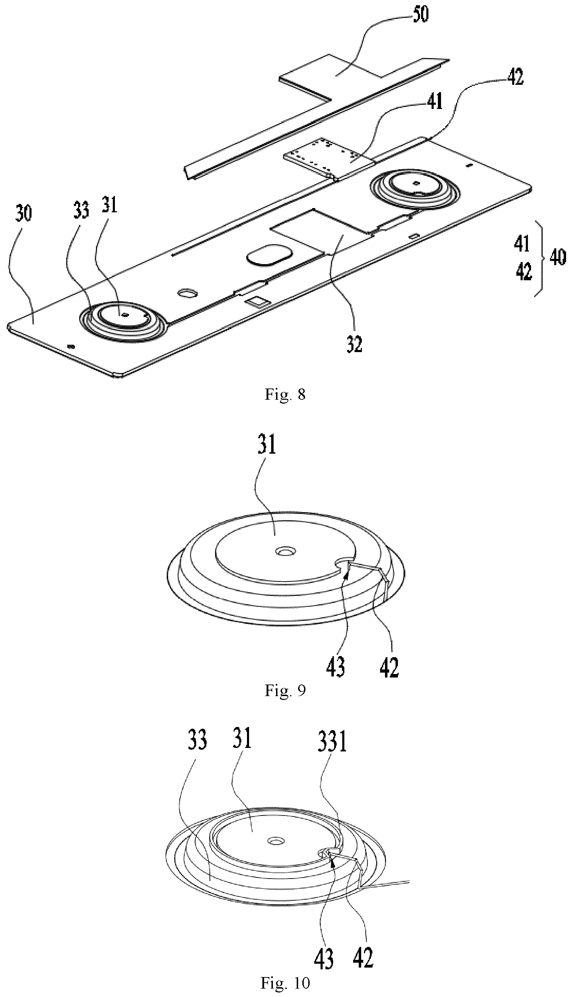

Fig. 8 shows an exploded schematic view of another first wall of a battery cell according to some embodiments of the present application.

Referring to Fig. 8, in some embodiments, the battery cell 7 further includes an insulating member 33, which is configured to insulate the electrode terminal 31 from the first wall 30; and the detecting assembly 40 includes a sensing component 41 and a conductive wiring 42, which are connected to each other, and the sensing component 41 is electrically connected to the electrode terminal 31 through the conductive wiring 42.

The arranging position of the insulating member 33 is not limited. For example, the insulating member 33 can be arranged on the side of the first wall 30 away from the accommodating chamber, the insulating member 33 can be arranged on the side of the first wall 30 facing the accommodating chamber, or the insulating members 33 can be arranged on both the side of the first wall 30 away from the accommodating chamber and the side of the first wall 30 facing the accommodating chamber, as long as the insulating member 33 can insulate the electrode terminal 31 from the first wall 30.

Exemplarily, in this embodiment, the concept of the present invention is illustrated by arranging the insulating member 33 on the side of the first wall 30 away from the accommodating chamber. The insulating member 33 sleeves on a portion of the electrode terminal 31 protruding from the surface of the first wall 30 on the side away from the accommodating chamber. The insulating member 33 abuts against the electrode terminal 31, and is used to insulate the electrode terminal 31 from the first wall 30. The detecting assembly 40 is arranged on the surface of the first wall 30 on the side away from the accommodating chamber.

The detecting assembly 40 includes a sensing component 41 and a conductive wiring 42 which are connected to each other. Exemplarily, the sensing component 41 is used to detect the working condition of the battery cell 7. The sensing component 41 includes, but is not limited to, a temperature sensing component, a pressure sensing component or the like. The conductive wiring 42 is used to transmit the electrical signal to the sensing component 41, which is electrically connected to the electrode terminal 31 through the conductive wiring 42.

Fig. 9 shows a schematic view of a local structure of an electrode terminal of a battery cell according to some embodiments of the present application.

Referring to Fig. 9, in some embodiments, a connecting part 43 is arranged on a surface of the electrode terminal 31 on a side away from the first wall 30, and the conductive wiring 42 is connected to the connecting part 43 to electrically connect the sensing component 41 with the electrode terminal 31. The connecting part 43 is a part where the electrode terminal 31 is connected to the conductive wiring 42.

Fig. 10 shows a schematic view of a local structure of an electrode terminal of another battery cell according to some embodiments of the present application.

Referring to Fig. 10, in some embodiments, the insulating member 33 includes a protrusion 331 protruding from the surface of the electrode terminal 31 on the side away from the first wall 30, and the protrusion 331 is configured to separate the surface of the electrode terminal 31 on the side away from the first wall 30 from the connecting part 43.

Since the battery cell 7 is not charged when assembled, it needs to be charged and activated. The process of first charging the battery cell 7 is called formation, which is used to activate the active material inside the battery cell 7. During the formation process of the battery cell 7, a formation pin is inserted into a central region of electrode terminal 31 for the formation operation. During this process, if the formation pin is inserted to deviate, which may accidentally touch the detecting assembly 40, and result in damage to the detecting assembly 40.

The insulating member 33 includes the protrusion 331 protruding from the surface of the electrode terminal 31 on the side away from the first wall 30, and the protrusion 331 is configured to separate a central region of the surface of the electrode terminal 31 on the side away from the first wall 30 from the connecting part 43. The protrusion 331 and the insulating member 33 can be an integrated-formed structure. The insulating member 33 can be integrally formed with the protrusion 331 through the stamping process, resulting in the integrated structure between the protrusion 331 and the insulating member 33. On one hand, it is convenient to apply the protrusion 331 of this embodiment to the existing insulating member 33 without making excessive changes to the design of the existing insulating member 33; on the other hand, the insulating member 33 forms the protrusion 331 through the stamping process, which is simple in the production process and does not require the additional material to form the protrusion 331.

By arranging protrusion 331 to separate the connecting part 43 from the central region of the surface of the electrode terminal 31 on the side away from the first wall 30, the risk of damage to the detecting assembly 40 during the operation process of the battery cell 7 can be reduced.

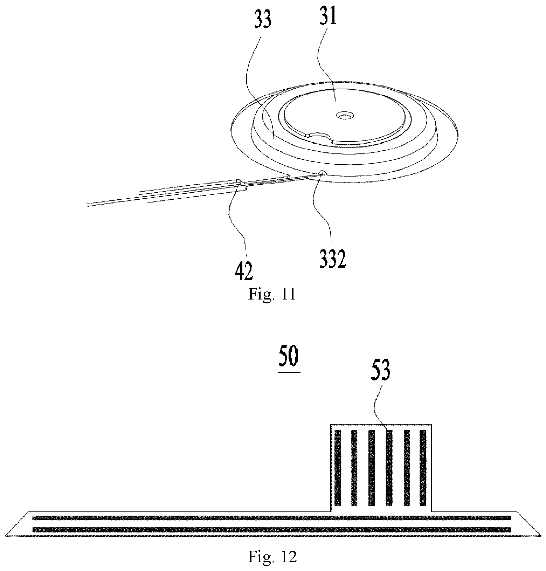

Fig. 11 shows a schematic view of a local structure of an electrode terminal of another battery cell according to some embodiments of the present application.

Referring to Fig. 11, in some embodiments, the insulating member 33 is provided with a through hole 332, and the conductive wiring 42 passes through the through hole 332 and is connected to the electrode terminal 31.

Specifically, the through hole 332 is provided on the side of the insulating member 33 close to the detecting assembly, and the sensing component 41 in the detecting assembly is electrically connected to the electrode terminal 31 located inside the insulating member 33 through the conductive wiring 42 passing through the through hole 332.

In the above technical solution, the conductive wiring 42 passes through the through hole 332 and is connected to the electrode terminal 31 located inside the insulating member 33. The conductive wiring 42 and the connecting part 43 of the electrode terminal 31 are located inside the insulating member 33, thereby reducing the risk of damage to the conductive wiring 42 and the connecting part 43 of the electrode terminal 31 due to exposure to the external environment.

In some embodiments, the casing 20 includes a casing body and an end cover, the casing body is provided with an opening, and the end cover is configured to cap the opening; and the end cover is the first wall 30 of the casing 20.

The casing may be various shapes, such as cylinder or cube. The shape of the casing can be determined based on the specific shape of electrode assembly 10. For example, if the electrode assembly 10 is a cylindrical structure, a cylindrical casing can be selected; if electrode assembly 10 is a rectangular structure, a rectangular casing can be selected.

The end cover may be of various structures, such as a plate-like structure or a hollow structure with an opening at an end. Exemplarily, the casing is the rectangular structure, the end cover is the plate-like structure, and the end cover caps the opening at a top of the casing. The end cover may be made of the insulating material (such as plastic) or the conductive material (such as metal).

In the embodiments of the present application, the first wall 30 may be the end cover. Optionally, the detecting assembly 40 can be arranged on the side of the end cover away from the accommodating chamber, or on the side of the end cover facing the accommodating chamber. The connection method between the detecting assembly 40 and the end cover may be, but is not limited to, welding, clamping, bonding or the like.

Fig. 12 shows a structural schematic view of another protecting structure according to some embodiments of the present application.

Referring to Fig. 12, in some embodiments, the protecting structure 50 is provided with a reinforcing part 53, which is formed by protruding from a surface of the protecting structure 50 on a side away from the detecting assembly 40.

Specifically, the reinforcing part 53 may be a reinforcing rib arranged on a surface of the protecting structure 50 on a side facing away from the detecting assembly 40. The reinforcing part 53 can reduce the deformation of the protecting structure 50, enhance the compressive strength of the protecting structure 50, and thus increase the service life of the protecting structure 50. The reinforcing part 53 and the protecting structure 50 may be an integrated-formed structure. The protecting structure 50 is integrally formed with the reinforcing part 53 through the stamping process, which is simple in the production process and does not require the additional material. The reinforcing part 53 is formed by protruding a surface of the protecting structure 50 on a side facing away from the detecting assembly 40, which can avoid from contacting the detecting assembly 40, and reduce the risk of the interference between the protecting structure 50 and the detecting assembly 40.

In the above technical solution, by arranging the reinforcing part 53 on the protecting structure 50, the compressive strength of the protecting structure 50 can be enhanced, and the protective effect of the protecting structure 50 can be further improved.

In some embodiments, the material of the protecting structure 50 is an electric-insulating and heat-insulating material.

The battery cell 7 is constantly charged and discharged during the process of using, and generate a significant amount of heat during process of charging-and-discharging. There is a risk of the contact interference between the protecting structure 50 and the detecting assembly 40. Exemplarily, the electric-insulating and heat-insulating material may be polytetrafluoroethylene, polyphenylene sulfide, polyether ether ketone, polyphenylene ester or the like. The present application does not specifically limit the material, which can be selected based on the actual situation.

By using the electric-insulating and heat-insulating material to manufacture the protecting structure 50, the impact of the heat generated by the battery cell 7 during using on the protecting structure 50 can be reduced, and the service life of the protecting structure 50 can be improved. In addition, the risk of the short circuit caused by the contact interference between the protecting structure 50 and the detecting assembly 40 which may affect the normal use of the detecting assembly 40 can be reduced.

According to the embodiments of the present application, the present application further provides a battery including the battery cell of the technical solutions as described above.

According to the embodiments of the present application, the present application further provides an electricity-consuming device including the battery cell of the technical solutions as described above, which is configured to supply electrical energy.

In order to better understand the battery cell according to the embodiments of the present application, based on the same invention concept, the embodiments of the above battery cell in practical application are illustrated herein.

The embodiments of the present application provide the battery cell 7 including the casing, the electrode assembly 10, the end cover, the electrode terminal 31, the insulating member 33, the detecting assembly 40 and the protecting structure 50. Herein, the casing is provided with the opening and the accommodating chamber, the electrode assembly 10 is accommodated in the accommodating chamber, and the end cover caps the opening of the casing. The end cover is provided with the concave part 32, which is formed by recessing the surface of the end cover on the side away from the accommodating chamber in the direction facing the accommodating chamber. The detecting assembly 40 is at least partially accommodated in the concave part 32. The protecting structure 50 covers at least a portion of the surface of the detecting assembly 40. The material of the protecting structure 50 is the electric-insulating and heat-insulating material.

Furthermore, the electrode terminal 31 protrudes from the surface of the end cover on the side away from the accommodating chamber, the electrode terminal 31 is electrically connected to the electrode tab of the electrode assembly 10, and the detecting assembly 40 is electrically connected to the electrode terminal 31.

Furthermore, the insulating member 33 is used to insulate the electrode terminal 31 from the end cover, the detecting assembly 40 includes the sensing component 41 and the conductive wiring 42 which are connected to each other, and the sensing component 41 is electrically connected to the electrode terminal 31 through the conductive wiring 42.

In the above technical solution, by arranging the detecting assembly 40 and the protecting structure 50 for protecting the detecting assembly 40 on the battery cell 7, the detecting assembly 40 can detect the working condition of the battery cell 7 in real time, quickly warn of the abnormal parameters during the operation of the battery cell 7, enable the corresponding safety agencies or personnel to respond in time, so as to improve the safety performance and the reliability of the battery cell 7. The protecting structure 50 covers at least a portion of the surface of the detecting assembly 40, which can reduce the risk of damage to the detecting assembly 40 during the production or using of the battery cell 7.

It should be noted that the embodiments and features in the embodiments of the present application can be combined with one another without conflict.

Finally, it should be noted that the above embodiments are only used to illustrate the technical solutions of the present application and do not to restrict them; although the present application has been described in detail with reference to the various embodiments as described above, those skilled in the art should understand that they can still modify the technical solutions recited in the embodiments as described above, or equivalently replace some of the technical features; these modifications or substitutions do not separate the essence of the corresponding technical solutions from the gist and the scope of the technical solutions of the various embodiments of the present application. Especially, as long as there is no structural conflict, the various technical features mentioned in the various embodiments can be combined in any way. The present application is not limited to the specific embodiments disclosed herein, but includes all technical solutions falling within the scope of the claims.

## Claims

1. A battery cell, **characterized by** comprising:
a casing, comprising an accommodating chamber;
an electrode assembly, accommodated in the accommodating chamber;
a detecting assembly, connected to the casing and configured to detect a working condition of the battery cell; and
a protecting structure, covering at least a portion of a surface of the detecting assembly.

2. The battery cell according to claim 1, **characterized in that** the casing comprises a first wall, and the detecting assembly is connected to the first wall.

3. The battery cell according to claim 2, **characterized in that** the detecting assembly is located on a side of the first wall away from the accommodating chamber.

4. The battery cell according to claim 3, **characterized in that** the casing comprises an electrode terminal, the electrode terminal protrudes from a surface of the first wall on a side away from the accommodating chamber, the electrode terminal is electrically connected to an electrode tab of the electrode assembly, and the detecting assembly is electrically connected to the electrode terminal.

5. The battery cell according to claim 4, **characterized in that** a surface of the protecting structure away from the first wall is not higher than a surface of the electrode terminal away from the first wall in a thickness direction of the first wall.

6. The battery cell according to claim 2, **characterized in that** the detecting assembly is located on a side of the first wall facing the accommodating chamber.

7. The battery cell according to any one of claims 2 to 6, **characterized in that** the first wall is provided with a concave part, the concave part is formed by recessing a surface of the first wall on a side away from the accommodating chamber in a direction facing the accommodating chamber,
or the concave part is formed by recessing a surface of the first wall on a side facing the accommodating chamber in a direction away from the accommodating chamber; and
the detecting assembly is at least partially accommodated in the concave part.

8. The battery cell according to claim 7, **characterized in that** a shape and a size of the protecting structure match with a shape and a size of an outer contour of the concave part, respectively.

9. The battery cell according to claim 7, **characterized in that**, in a thickness direction of the first wall, a surface of the protecting structure away from the first wall is not higher than the surface of the first wall on the side away from the accommodating chamber.

10. The battery cell according to any one of claims 1 to 6, **characterized in that** the protecting structure comprises a main body, which covers at least a portion of the surface of the detecting assembly.

11. The battery cell according to claim 10, **characterized in that** the protecting structure further comprises a side part, which surrounds and is connected to the main body to form an accommodating space, and the accommodating space is configured to accommodate the detecting assembly.

12. The battery cell according to any one of claims 1 to 6, **characterized in that** the protecting structure is a film structure, which is attached to at least a portion of the surface of the detecting assembly.

13. The battery cell according to claim 1, **characterized in that** the protecting structure is snap-fitted or bonded to the casing.

14. The battery cell according to claim 4 or 5, **characterized in that** the battery cell further comprises an insulating member, which is configured to insulate the electrode terminal from the first wall; and
the detecting assembly comprises a sensing component and a conductive wiring, which are connected to each other, and the sensing component is electrically connected to the electrode terminal through the conductive wiring.

15. The battery cell according to claim 14, **characterized in that** a connecting part is arranged on a surface of the electrode terminal on a side away from the first wall, and the conductive wiring is connected to the connecting part to electrically connect the sensing component with the electrode terminal.

16. The battery cell according to claim 15, **characterized in that** the insulating member comprises a protrusion protruding from the surface of the electrode terminal on the side away from the first wall, and the protrusion is configured to separate the surface of the electrode terminal on the side away from the first wall from the connecting part.

17. The battery cell according to claim 14, **characterized in that** insulating member is provided with a through hole, and the conductive wiring passes through the through hole and is connected to the electrode terminal.

18. The battery cell according to claim 2, **characterized in that** the casing comprises a casing body and an end cover, the casing body is provided with an opening, and the end cover is configured to cap the opening; and
the end cover is the first wall of the casing.

19. The battery cell according to claim 1, **characterized in that** the protecting structure is provided with a reinforcing part, which is formed by protruding from a surface of the protecting structure on a side away from the detecting assembly.

20. The battery cell according to claim 1, **characterized in that** a material of the protecting structure is an electric-insulating and heat-insulating material.

21. A battery, **characterized by** comprising the battery cell according to any one of claims 1 to 20.

22. An electricity-consuming device, **characterized by** comprising the battery cell according to any one of claims 1 to 20, which is configured to supply electrical energy.
